Europäisches Patentamt

European Patent Office

Office européen des brevets

(11) Publication number:

**0 232 151**
**A2**

## (12) EUROPEAN PATENT APPLICATION

(21) Application number: **87300870.0**

(22) Date of filing: **30.01.87**

(51) Int. Cl.⁴: **F 16 D 13/68**

(30) Priority: **04.02.86 JP 14595/86**

(43) Date of publication of application:
**12.08.87 Bulletin 87/33**

(84) Designated Contracting States: **DE FR GB**

(71) Applicant: **TOYOTA JIDOSHA KABUSHIKI KAISHA**
**1, Toyota-cho Toyota-shi**
**Aichi-ken 471 (JP)**

(72) Inventor: **Yamada, Shigemichi**
**36, Okauecho-1-chome**
**Chijusa-ku Nagoya (JP)**

**Kanbe, Yasuhide**
**1-8, Imacho-3-chome**
**Toyota-shi (JP)**

**Ohtani, Hisao**
**1-1, Heiwacho-3-chome**
**Toyota-shi (JP)**

**Umeyama, Mitsuhiro**
**2-2, Shinmachi-4-chome**
**Toyota-shi (JP)**

**Maruyamano, Satoru**
**56, Ekakushinmachi-2-chome**
**Toyota-shi (JP)**

(74) Representative: **Ben-Nathan, Laurence Albert et al**
**c/o MICHAEL BURNSIDE & PARTNERS 2 Serjeants' Inn**
**Fleet Street**
**London EC4Y 1HL (GB)**

(54) **Clutch disc.**

(57) A clutch disc in which first dampers are connected to clutch facings and second and succeeding dampers are connected to a clutch hub so that the output of the engine is transmitted from the first dampers to the transmission through the second and succeeding dampers. The equivalent moment of inertia applied to the side of the transmission is set to be 15 to 35% of the overall moment of inertia of the clutch disc.

FIG. 3

**Description**

CLUTCH DISC

## BACKGROUND OF THE INVENTION

### FIELD OF THE INVENTION

This invention relates to a clutch disc and more particularly to an improved clutch disc for use in vehicles which is capable of reducing the chattering noise which is generated by the gears of a manual transmission while the engine is idling.

### DESCRIPTION OF THE PRIOR ART

Recently, the comfort and quietness within the passenger compartment of a vehicle are considered to be as important as the various factors of vehicle performance, and there is now a demand for improvements in quality in terms of reduction in the levels of vibration and noise.

On the other hand, various measures have been developed for reducing the weight of the vehicle and the resistance of the engine or other portions of the drive system in order to improve vehicle performance in terms of fuel consumption and power utilization. These measures closely relate to the generation of vibration and noise and make it difficult to achieve reduction in the same.

One of the common phenomena responsible for generating abnormal noise which emanates from the drive system of a vehicle while the engine is idling is the sound of gears hitting each other in a manual transmission. This phenomenon occurs due to fluctuations of the angular velocity of the engine being transmitted to a pair of gears with a certain degree of backlash which causes the tooth surfaces of these gears to repetitively hit each other and thus generate noise. Specifically, when for example the driver shifts the transmission into neutral and engages the clutch after stopping the vehicle at a red traffic signal, the transmission generates an abnormal noise such as the sound of rattling of metal parts.

The main factors responsible for the generation of such chattering of gears are thought to be angular velocity fluctuation on the engine side, backlash between a pair of gears, the moment of inertia of a driven gear, drag resistance, etc. Chattering of the transmission tends to be increased when there is a relatively high level of angular fluctuation on the engine side, a large degree of backlash, a larger moment of inertia of a driven gear, or a small degree of drag resistance.

In view of this tendency, the following countermeasures may be employed to reduce the noise of chattering of transmission gears with respect to each of these factors. (a) With respect to angular velocity fluctuations:
to increase the moment of inertia of a fly-wheel;
to increase the rotational speed of idling; and
to improve the torsional characteristics of clutch discs
(b) With respect to backlash:
to reduce the backlash between pairs of gears; and
to adopt an anti-backlash mechanism.
(c) With respect to moment of inertia:
to reduce the moment of inertia of each gear.
(d) With respect to drag resistance:
to use high-viscosity lubricating oil; and
to adopt various types of technique for imparting drag.

One special technique of absorbing the angular velocity fluctuations of an engine by means of a clutch disc is known to be effective in terms of optimizing fuel consumption and power performance when adapted for diesel engines, which generally display a larger degree of angular velocity fluctuation (p. 1299 to p. 1300 of "Jidosha Gijutsu" Vol. 36, No. 12, 1982).

On the other hand, a conventional technique for reducing the noise of chattering of transmission gears is knwon which imparts an extremely small value of spring constant to a first damper and minimizes the hysteresis of the same which is initially operative in a range of clutch operation within which the torque transmitted by the clutch is extremely small or zero, in other words, in a range corresponding to an initial torsional angle. Specifically, various clutch discs have been proposed for diesel engines, which generate a higher level of chattering of gears than gasoline engines, of the type in which a first damper (supplementary damper) which is operative at an initial torsional angle and which displays a low level of hysteresis is added in series to second and succeeding dampers (main dampers) which have larger spring constants and higher levels of hysteresis and which are operative at a torsional angle or angles larger than a predetermined value. In particular, one type of clutch disc, in which the supplementary damper is disposed at a position shifted in the axial direction (to the side of a fly-wheel or a pressure plate) relative to the main dampers having clutch facings and in which the main and supplementary dampers are connected to each other in series to transmit the output of the engine to the transmission side by way of the supplementary damper, is more advantageous in terms of the tuning of the torsional characteristics when compared with other types of clutch discs in which the main and supplementary dampers are disposed in the same plane and around the same circle or concentrically about the same center, since the former type makes it possible to set a larger torsional angle which is allowable in consideration of the strength provided (as disclosed in, e.g., Japanese Utility Model Examined Publication No. 45537/1973, Japanese Patent Examined Publication No. 14290/1980, Japanese Patent Unexamined Publication No. 79333/1982, No. 103030/1984, No. 166724/1984, and No. 84431/1985).

In the setting of the torsional characteristics of these clutch discs, it is possible for the present techniques to properly cope without difficulty with respect to diesel engine vehicles because the degree of angular velocity fluctuation (rotational energy fluctuation) of the engine in vehicles with a diesel engine is so large in contrast with that in gasoline engine vehicles that increases are achieved in the spring constant, the hysteresis and the torsional angle of the first damper of the clutch disc provided as a countermeasure for the purpose of reducing the chattering of gears.

However, the respective values of the spring constant, the hysteresis and the torsional angle of the clutch that are required as a counter to the chattering of gears in vehicles with a gasoline engine is extremely small, because the degree of angular velocity fluctuation (rotational energy fluctuation) of the engine in such vehicles is smaller than that in those with a diesel engine. It is therefore difficult for the present techniques to cope with the problem in generation by an accurate adjustment of the torsional characteristics. Even if it were possible to set the spring constant, the hysteresis and the torsional angles as required, it would be difficult to stably maintain these characteristics and achieve durability.

The type of clutch disc which is represented by that disclosed in Japanese Utility Model No. 45537/1973 is effective for use in diesel engine vehicles but is not capable of sufficiently reducing the chattering of transmission gears when adapted for gasoline engine vehicles. Therefore, a new type of clutch disc capable of effectively preventing the chattering of transmission gears in vehicles with a gasoline engine has been eagerly anticipated.

## SUMMARY OF THE INVENTION

It is therefore an object of the present invention to eliminate the problems associated with the noise of chattering generated by the transmission gears of a vehicle with a gasoline engine by setting the values of the spring constant, the hyteresis and the torsional angle of a clutch disc adopted as a counter to such chattering at levels that are suitable for ensuring proper torsional characteristics.

To this end, the present invention provides a clutch disc having: clutch facings pinched and pressed between a pressure plate and a fly-wheel rotating with a crank shaft in one united body; first dampers operative at an initial torsional angle and composed of a first spring having a relatively small spring constant and a first friction device for providing a small degree of hysteresis; second and succeeding dampers operative at angles larger than a predetermined torsional angle and composed of second and succeeding springs having large spring constants and a second friction device for providing a large degree of hysteresis; and a clutch hub fitted with splines around the input shaft of a transmission such as to be fixed in relation thereto in the direction of rotation of the shaft and slidable in the axial direction, wherein each of the first dampers is connected to the clutch facings; the second and succeeding dampers are connected to the clutch hub so that the output of the engine is transmitted from the first dampers to the transmission through said second and succeeding dampers; and the equivalent moment of inertia applied to the side of the transmission is set to be 15 to 35% of the overall moment of inertia of the clutch disc.

## BRIEF DESCRIPTION OF THE DRAWINGS

Fig. 1 is a longitudinal sectional view of an upper half portion of a first embodiment of the present invention on a plane taken through first and second springs (a cross-sectional view taken along lines I-I shown in Figs. 3 and 4);

Fig. 2 is a longitudinal sectional view of the embodiment shown in Fig. 1 on a plane taken through first and second stopper pins (a cross-sectional view taken along lines II-II shown in Figs. 3 and 4);

Fig. 3 is a view as seen in the direction indicated by the arrow III in Fig. 1;

Fig. 4 is a view as seen in the direction indicated by the arrow IV shown in Fig. 1;

Fig. 5 is a graph of the torsional characteristics of a clutch disc in accordance with the present invention;

Fig. 6 is a schematic illustration of a model of the vibration of a drive system occuring between a fly-wheel and a transmission;

Fig. 7 is a schematic illustration of a model of the vibration occurring at a free end remodeled from what is shown in Fig. 6;

Fig. 8 is a graph of the relationship between the amplitude x and the frequency f in the models of vibration shown in Figs. 6 and 7;

Fig. 9 is a graph of the relationship between the level of chattering of gears during the idling period and the rate of the equivalent moment of inertia $I_{CT}$ of the clutch disc on the side of the transmission to the overall equivalent moment $I_{CD}$ of the clutch disc;

Fig. 10 is a graph showing a comparison between the clutch disc in accordance with the present invention and a conventional type of clutch disc with respect to the relationship between the input-axis equivalent moment of inertia $I_{T/IN}$ of the transmission and the transmission-side equivalent moment of inertia $I_{CT}$ of the clutch disc in the range of generating chattering of gears during the idling period; and

Fig. 11 is a longitudinal cross-sectional view of a clutch disc which represents a second emboidment of the present invention.

## DESCRIPTION OF THE PREFERRED EMBODIMENTS

The present invention provides a means for solving the above-described problems which is arranged in the manner as described below.

The present invention has been made in consideration of the moment of inertia of a clutch disc and the invention provides a clutch disc having first dampers disposed on the side of the engine and second and succeeding dampers disposed on the side of the transmission, whereby the output of the engine is transmitted from the first dampers to the transmission through the second and succeeding dampers, and wherein the equivalent moment of inertia applied to the side of the transmission is set to be 15 to 35% of the overall moment of inertia of the clutch disc.

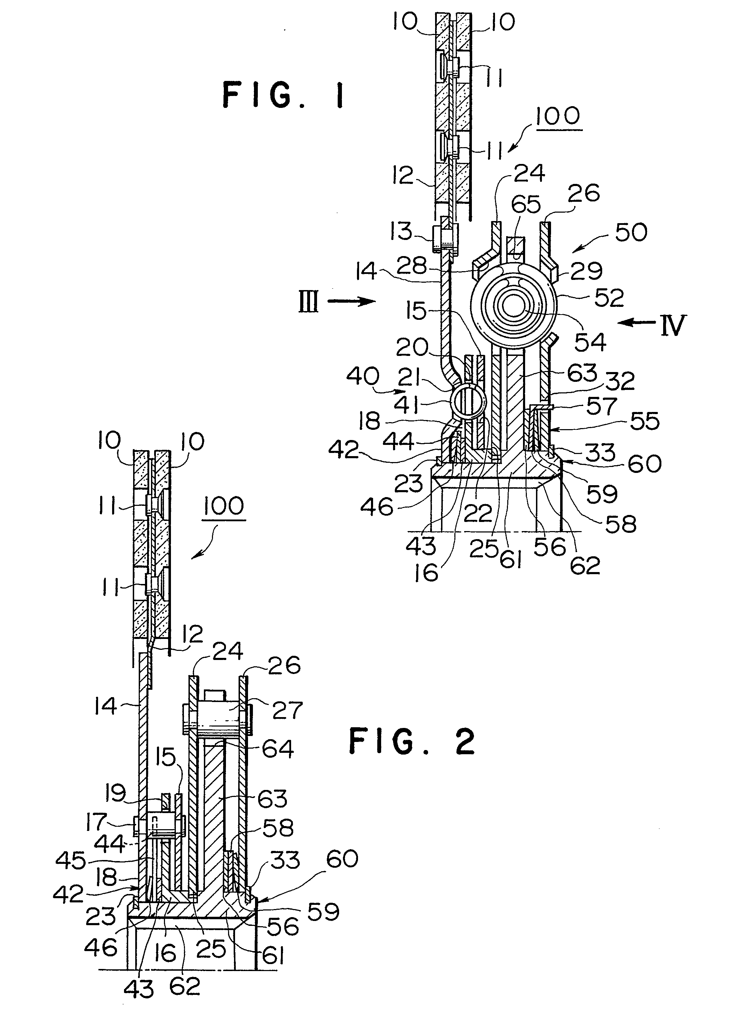

More concretely, as shown in Figs. 1 and 2, a clutch disc 100 has clutch facings 10 which are pinched and pressed between a pressure plate and a fly-wheel rotating with a crank shaft in one united body, first dampers 40 each of which is operative at an initial torsional angle and is composed of a first spring 41 having a relatively small spring constant and a first friction device 42 for providing a small degree of hysteresis, second and succeeding dampers 50 and 51 which are operative at angles larger than a predetermined torsional angle and which are composed of second and succeeding springs 52 and 53 having large spring constants and a second friction device 55 for providing a large degree of hysteresis, and a clutch hub 60 which is fitted with splines around the input shaft of a transmission such as to be fixed in relation thereto in the direction of rotation of the shaft and slidable in the axial direction. Each of the first dampers 40 is connected to the clutch facings 10, and the second or succeeding dampers 50 and 51 are connected to the clutch hub 60. These parts constitute the clutch so that the output of the engine is transmitted from the first dampers 40 to the transmission through the second and succeeding dampers 50 and 51. The equivalent moment of inertia applied to the side of the transmission is set to be 15 to 35% of the overall moment of inertia of the clutch disc 100.

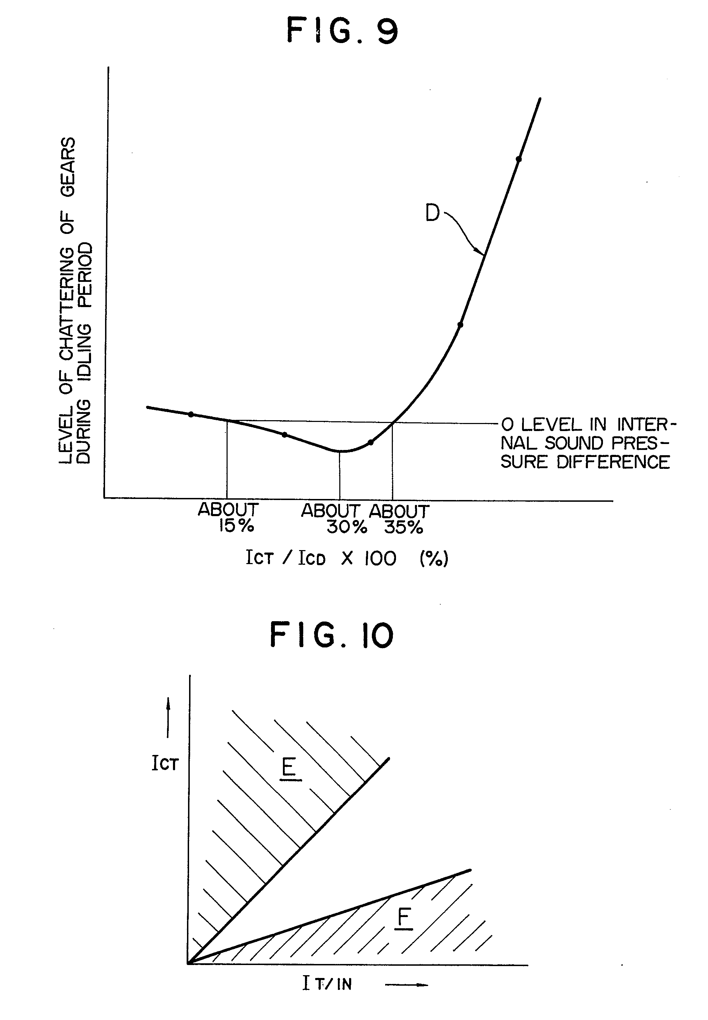

With this arrangement, in the range wherein the ratio of the transmission-side equivalent moment of inertia $I_{CT}$ to the overall moment of inertia $I_{CD}$ of the clutch disc is about 15 to 30% (the ideal value being about 30%), the interior sound pressure difference is reduced below the zero level, as shown in Fig. 9, thereby effectively reducing the noise of chattering generated by the transmission gears.

The present invention thus solves the problem of chattering generated by the manual transmission of a gasoline engine vehicle during idling periods.

The clutch disc constructed in accordance with the present invention is so compactly arranged that it can be easily mounted in an ordinary clutch accommodation chamber.

Furthermore, the present invention does not affect the performance or the durability of the synchronizing mechanism of the manual transmission in which it is employed.

An embodiment of the present invention will be described in detail with reference to the accompanying drawings.

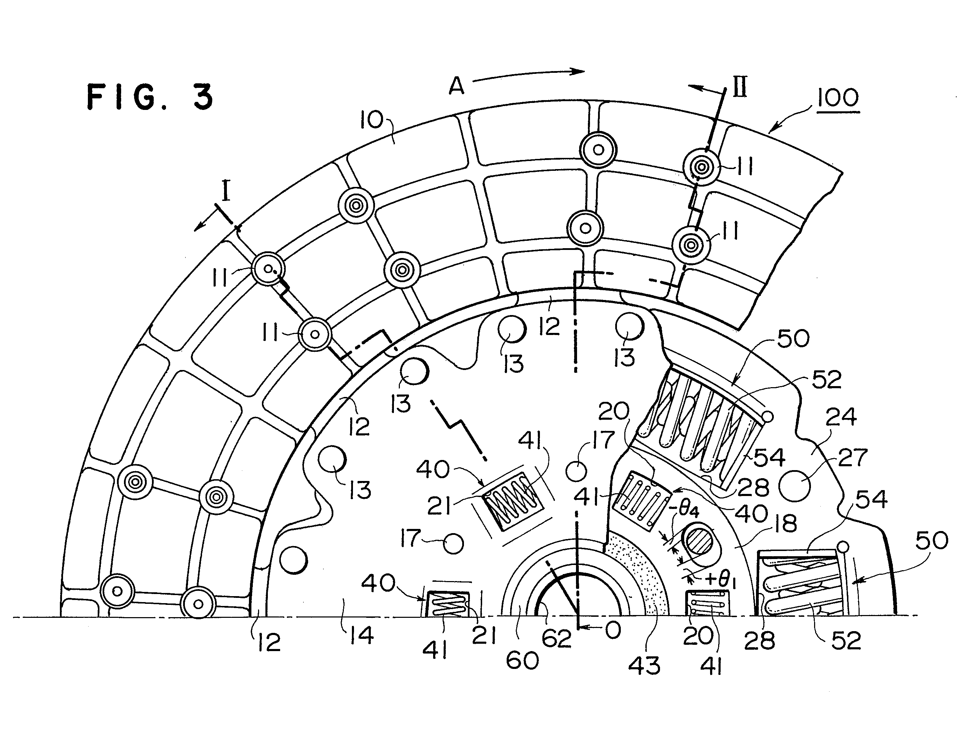

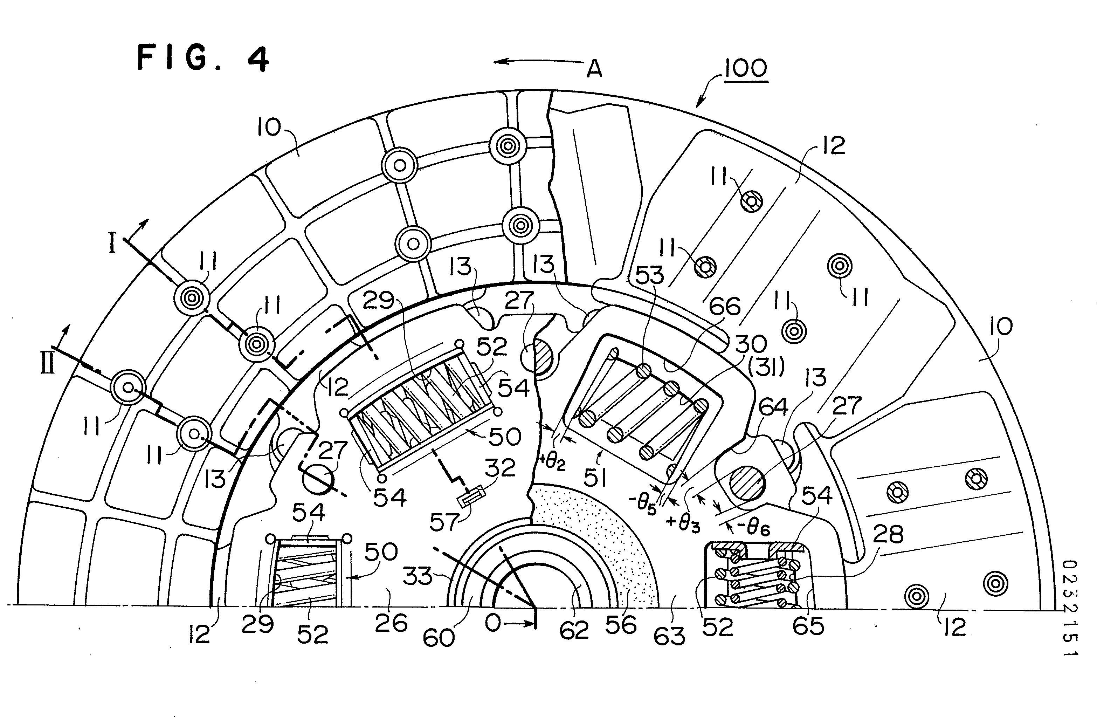

Figs. 1 to 4 show a clutch disc which represents the first embodiment of the present invention. Fig. 1 is a longitudinal sectional view of an upper half portion of this embodiment on a plane through first and second springs (cross-sectional view taken along lines I-I shown in Figs. 3 and 4); Fig. 2 is a longitudinal sectional view of this embodiment on a plane through first and second stopper pins (cross-sectional view taken along lines II-II shown in Figs. 3 and 4); Fig. 3 is a view as seen in the direction indicated by the arrow III shown in Fig. 1; and Fig. 4 is a view as seen in the direction indicated by the arrow IV shown in Fig. 1.

As shown in these drawings, a clutch disc 100 is composed of clutch facings 10, first dampers (supplementary dampers) 40 provided as a counter to chattering of gears, second and succeeding dampers (main dampers) 50 and 51 and a clutch hub 60.

The clutch facings 10 having an annular shape are pinched and pressed between a pressure plate and a fly-wheel fixed to a crank shaft (not shown) such as to be selectively engaged therewith, and are supported by rivets 11 on the opposite sides of cushion plates 12 which are formed of corrugated plates and which are fixed to a disc plate 14 by means of rivets 13.

The first damper 40 is provided with first springs 41 having a smaller spring constant and a first frictional device 42 which displays a small degree of hysteresis. The first springs 41 and the first friction device 42 are operative at an initial torsional angle, and are disposed between the disc plate 14 and a first supplementary disc plate 15 spaced apart from the disc plate 14, or between the plate 14 and a first clutch hub 16 interposed between these plates 14 and 15. As is specifically shown in Fig. 2, the disc plates 14 and 15 are fixed to each other by means of first stopper pins 17, and are mounted in such a manner as to be rotatable relative to the first clutch hub 16. The first clutch hub 16 has an integrally formed flange 18 which projects in the radial direction and which has, at its outer peripheral portion, elongated holes 19 extending in the circumferential direction. As is specifically shown in Fig. 3, the first stopper pins 17 pass through the elongated holes 19, and the rotary motion of the plates 14 and 15 relative to the clutch hub 16 is restricted within a range defined by predetermined angles of $+\Theta_1$ and $-\Theta_4$ when the first stopper pins 17 contact the inner surfaces of the elongated holes 19.

Six rectangular apertures 20 for accommodating the first springs 41 having a small spring constant (compression coil springs) are also formed in the flange 18 of the first clutch at regular intervals (intervals of 60°) in the circumferential direction. Similarly, rectangular apertures 21 and 22 are formed in the disc plate 14 and the supplementary disc plate 15 in positions corresponding to the rectangular apertures 20 formed in the flange 18. The first springs 41 are mounted in these rectangular apertures 20 to 22 while being pressurized.

Between the flange 18 of the first clutch hub and the disc plate 14 are interposed components of the first friction device 42 including: a friction member 43 in the form of a ring; a thrust plate 45 the notches 44 of which engage with the first stopper pins 17 such as to prevent it from rotating; and a cone spring 46 for pressing this thrust plate 45 against the friction member 43. The disc plate 14 is fixed at its inner periphery by caulking through a plate 23 to a second clutch hub 60 which is described later.

When torque is transmitted from the disc plate 14 to the flange 18 of the first clutch hub 60 and to the supplementary disc plate 15, a relative angular displacement (torsional angle displacement) is created therebetween while the first spring 41 is being compressed. This relative angular displacement causes slippage on both surfaces of the friction member 43 which is being pressed by the cone spring 46. These members are designed such that a small degree of hysteresis $H_1$ is obtained on the basis of a small spring constant $K_1$ of the first spring 41 operative at an initial torsional angle and the friction caused by the above-described slippage.

A second supplementary disc plate 24 is integrally connected to the boss portion of the first clutch hub 16 by means of splines and is fixed in the direction of rotation. The second supplementary disc plate 24 and a third supplementary disc plate 26 are spaced apart and integrally fixed to each other by means of second stopper pins 27, as specifically shown in Fig. 2. The second and third supplementary disc plates 24 and 26 are rotatable relative to the second clutch hub 60. The second clutch hub 60 has, toward its inner periphery, a boss portion 61 which has splines 62 formed in the inner peripheral surface of the boss portion 61. The second clutch hub 60 is thereby integrally connected to the input shaft of the transmission (not shown) in the rotational direction and is slidable in the axial direction. The clutch hub 60 also has an integrally formed flange 63 which is disposed on the outer periphery of the boss portion 61 and projects therefrom in the radial direction, and which has, at its outer peripheral edge, notches 64. As specifically shown in Fig. 4, the second stopper pin 27 passes through each of the notches 64, and the movement of the plates 24 and 26 relative to the second clutch hub 60 is restricted within a range defined by predetermined angles $+ \Theta_3$ and $- \Theta_b$. Second dampers 50 and third dampers 51 are interposed between the flange 63 of the second clutch hub and the plates 24 and 26.

Each of the second dampers 50 has a second spring (dual compressive coil spring) 52 which has a larger spring constant and which operates after the first damper 40 at torsional angles larger than the predetermined torsional angles $+ \Theta_1$ and $- \Theta_4$, in other words, after each first stopper pin 17 has been brought into contact with the end of the elongated hole 19 of the first clutch hub. Each of the third dampers 51 has a third spring 53 which has a spring constant larger than that of the first spring 52 and which operates after the second damper 40 at torsional angles larger than the predetermined torsional angles $+ \Theta_2$ and $- \Theta_5$. The second damper 50 and the third damper 51 are provided with a second friction device 55 for obtaining a high degree of hysteresis.

As is specifically shown in Fig. 4, the second springs 52 together with spring sheets 54 are mounted in four rectangular apertures 65 disposed in the flange 63 of the second clutch hub at certain intervals in the circumferential direction and in four rectangular apertures 82 and 29 formed in the plates 24 and 26. In this state, these springs are pressurized through spring sheets 54 in the same manner as that in the case of the first spring 41. As shown in Fig. 4. the third springs 53 are positioned in rectangular apertures 66 which are formed in the flange 63 of the second clutch hub in diametrically opposite positions, with gaps which correspond to the torsional angles $+ \Theta_2$ and $- \Theta_5$ being formed between each spring and aperture. The third springs 53 are mounted, in a pressurized state, in rectangular apertures 30 and 31 formed in the plates 24 and 26. Between the flange 63 of the second clutch hub and the third supplementary disc plate 26 are interposed a friction member 56 in the form of a ring, a thrust plate 58 which is prevented from rotating by engagement between a click portion 57 formed therein and a hole 32 formed in the third supplementary disc plate, and a cone spring 59 adapted to press the thrust plate 58 against the friction member 56, these members constituting the second friction device 55. The third supplementary disc plate 26 is fixed at its inner periphery to the second clutch hub 60 by caulking through a plate 33. In Figs. 3 and 4, the arrow A indicates the direction of rotation of the clutch disc 100.

When torque is transmitted from the plates 24 and 26 to the flange 63 of the second clutch hub, the plates 24 and 26 and the flange 63 cause a relative angular displacement (torsional angle displacement) while compressing the second springs 52 and, if the torque is large, the third springs 53. This relative angular displacement causes slippage on both surfaces of the friction member 56 which are pressed by the cone spring 59. A high degree of hysteresis $H_2$ is thereby obtained on the basis of a large spring constant $K_2$ of the first spring 52 operative at torsional angles larger than $+ \Theta_1$ and $- \Theta_4$ and the above-described slippage, and a larger spring constant $K_3$ effective at torsional angles larger than $+ \Theta_2$ and $- \Theta_5$ is obtained when both the second and third springs 52 and 53 operate.

In the clutch disc 100 arranged as described above, the output of the engine is transmitted from the clutch facings 10 pinched and pressed between the pressure plate and the fly-wheel which rotates integrally with the crank shaft (not shown) to the cushion plate 12, the plates 14 and 15, the first damper 40, the first clutch hub 16, the plates 24 and 26, the second damper 50 (the third damper 51), the second clutch hub 60, and the input shaft of the transmission.

Since the transmitted torque is very small when the engine is idling, only the first springs 41 and the first friction devices 42 operate, and the second and succeeding springs 52, 53 and the second friction devices 55 are not operated.

If the torsional angle of the clutch disc exceeds $+ \Theta_1$ and $- \Theta_4$ with an increase in the transmitted torque, the second dampers 50 and the second friction devices 55 operate. If the transmitted torque is further increased and the aforementioned torsional angle exceeds $+ \Theta_2$ and $- \Theta_5$, the third damper 51 also operate.

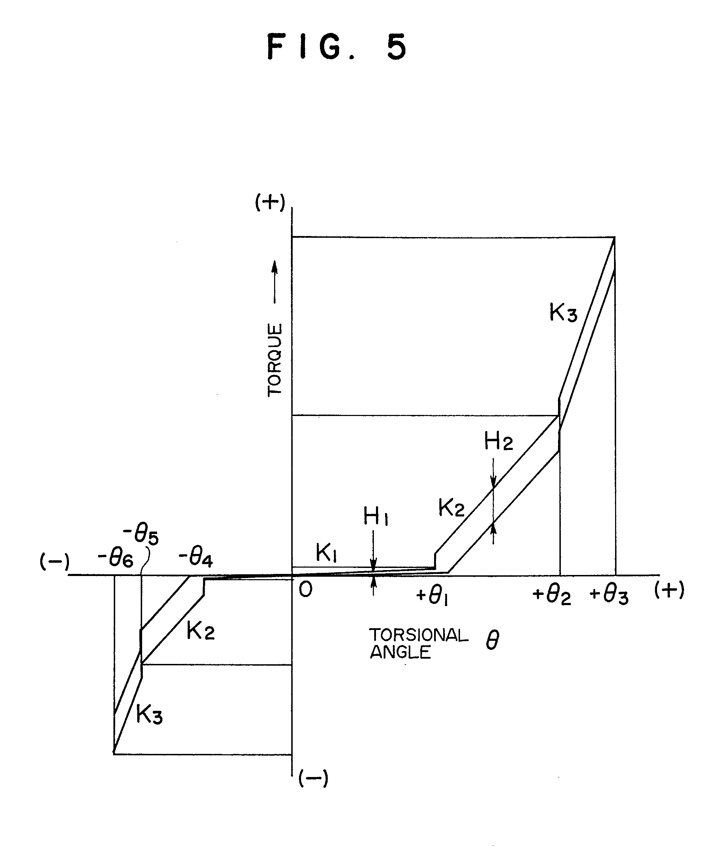

Consequently, as shown in Fig. 5, it is possible to obtain torsional characteristics in three stages comprised of $K_1$ and $H_1$ in the range where the torsional angle of the clutch disc ranges between $0°-+ \Theta_1$ and $0°- - \Theta_4$, $K_2$ and $H_2$ in the range where it ranges between $+ \Theta_1 - + \Theta_2$ and $- \Theta_4 - - \Theta_5$, and $K_3$ and $H_3$ in the range where it ranges between $+ \Theta_2 - + \Theta_3$ and $- \Theta_5 - - \Theta_6$. In Fig. 5, the ( + ) side denotes an accelerated state, and the (-) side, a reduced-speed state (the state of engine brake), respectively.

In this embodiment, the equivalent moment of inertia applied to the transmission side at the time of occurrence of chattering of the manual transmission gears is set such as to account for 15 - 35% of the overall moment of inertia of the clutch disc.

This equivalent moment of inertia of the clutch disc will now be described in detail.

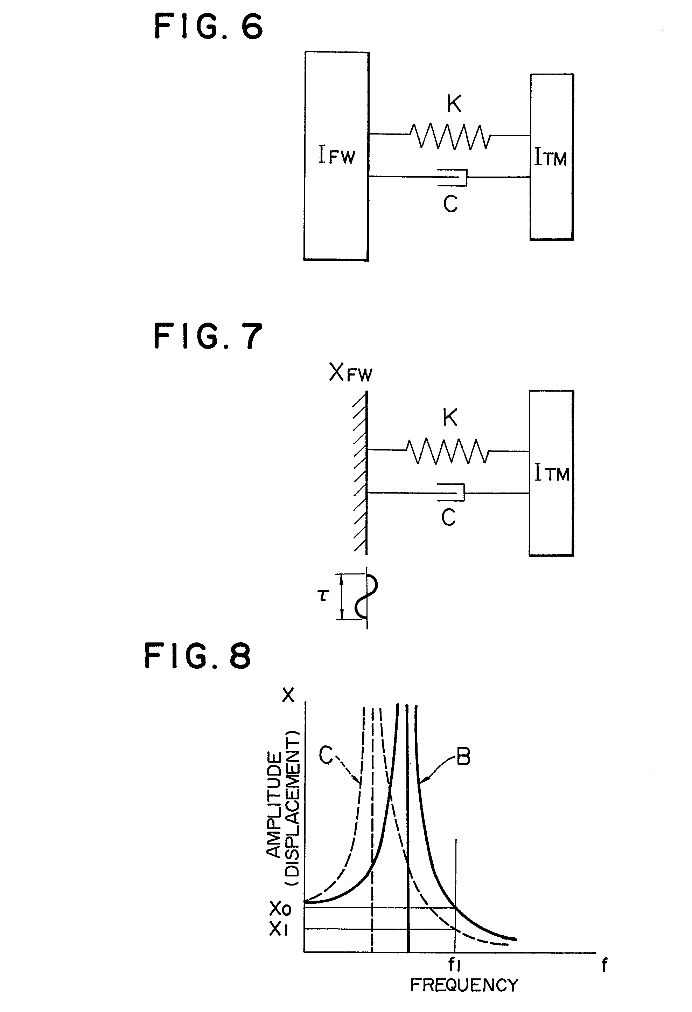

First, a model of the vibration of a drive system occurring between the fly-wheel and the transmission is schematically shown in Fig. 6. In the drawing, $I_{FW}$ denotes the moment of inertia of the fly-wheel; $I_{TM}$, the moment of inertia of the transmission; K, a spring constant; and c, a damping coefficient. The moment of inertia of the fly-wheel $I_{FW}$ is far greater than the moment of inertia of the transmission $I_{TM}$, i.e., the relationship of $I_{FW} \gg I_{TM}$ holds. For this reason, this model can be simplified and expressed as a model of vibration occurring at a free end, as shown in Fig. 7. The amplitude x (displacement) and the frequency f in this model of vibration at the free end are in the relationship shown by a solid line B in Fig. 8, the resonance frequency f thereof can be obtained from the formula: $f = 1/2\pi \sqrt{K/I_{TM}}$. Consequently, if the moment of inertia of the transmission $I_{TM}$ is increased, the resonance frequency is offset toward the side of the low frequency shown by a broken line C. As a result, the amplitude $x_0$ in a frequency $f_1$ during idling of the engine, wherein chattering of the transmission gears present a problem, is reduced to a smaller level of amplitude $x_1$. In other words, it can be seen that, in order to reduce the angular velocity fluctuation of the engine to a small level, it suffices to set the moment of inertia of the transmission $I_{TM}$ to a large level.

However, if the moment of inertia of the driven gear and the rotary axis is enhanced to increase the moment of inertia of the transmission $I_{TM}$, problems arise in the synchronizing properties and the durability of a synchronizer ring and the like, so that it is extremely difficult to realize this arrangement.

Therefore, the present inventor developed analysis of the above-described phenomenon of chattering of the transmission gears during idling of the engine. By shifting the perspective from the moment of inertia of the transmission per se occurring in the input shaft and the succeeding components, which has hitherto been clarified in various literatures, the present inventor conducted further analysis by taking note of the moment of inertia of the clutch disc per se.

If attention is focused on the ranges of the torsional characteristics of the clutch disc ($K_1$, $H_1$, $+\Theta_1 - -\Theta_4$) acting when chattering of the transmission gears occurs, the moment of inertia of the clutch disc in the present conditions can be classified into the following two types:

(a) The moment of inertia acting as the fly-wheel-side equivalent moment of inertia ($I_{CF}$)

(b) The moment of inertia acting as the transmission-side equivalent moment of inertia ($I_{CT}$)

In conventional techniques, the fly-wheel-side equivalent moemnt of inertia $I_{CF}$ of the clutch disc has been extremely large, and an investigation revealed that this type of moment of inertia accounted for 91 - 94% of the overall moment of inertia $I_{CD}$ of the clutch disc. Particularly in the clutch disc typified by the above-mentioned Japanese Utility Model Examined No. 45537/1974, an arrangement is made in which the main dampers (the second and succeeding dampers) are coupled with the clutch facings, and the supplementary dampers (the first dampers) are coupled with the transmission-side clutch hub. Hence, when the engine is idling, the transmission-side equivalent moment of inertia $I_{CT}$ occurs only in the clutch hub, with the result that the rate of the $I_{CF}$ is greater than that of $I_{CT}$.

For this reason, levels of chattering of the gears during idling of the engine were determined in cases where the ratio of the $I_{CF}$ and $I_{CT}$ was varied consecutively by using general torsional characteristics of various types of commercially available clutch discs. The respective torsional characteristics of the first damper in the clutch disc were set as follows:

o Spring constant $K_1 = 1$ kgf•m/rad

o Hysteresis $H_1 = 0.1$

o Torsional angle $+\Theta_1 - -\Theta_4 = 0.14$ rad

It should be noted that these values are typical values of general torsional characteristics, and are levels that can be sufficiently coped with by existing techniques.

The results are shown in Fig. 9. As is apparent from this drawing, if the ratio of the transmission-side equivalent moment of inertia $I_{CT}$ of the clutch disc to the overall moment of inertia $I_{CD}$ of the clutch disc ($I_{CT}/I_{CD} \times 100\%$) was increased, the level of chattering of the gears declined gradually, and the maximum decline was noted at approximately 30%. If this ideal value of approximately 30% was exceeded, the level of chattering of the gears increased. Conceivably, this is attributable to the fact that the rotational displacement of the clutch disc becomes large, so that the clutch disc enters the range of the high spring constant $K_2$ by exceeding the tortional angles $+\Theta_1$ and $-\Theta_4$, thereby aggravating the level of chattering of the gears. It was found that if the ratio of the transmission-side equivalent moment of inertia $I_{CT}$ of the clutch disc is set in the range of about 15% to about 35%, it is possible to attain a 0 level in the internal sound pressure difference (the difference in the level of chattering of the gears when the clutch is disengaged and when it is engaged is 0), i.e., a level where chattering of the gears does not practically occur. Incidentally, if the values of $K_1$, $H_1$ and $+\Theta_1 - -\Theta_4$ in the range where chattering of the gears occurs during idling of the engine are altered, the solid line D in Fig. 9 changes slightly. In the normally used range estimated from the existing technical level, the level of the chattering in question can be expressed by a substantially identical diagram. In the ratios shown in the drawing, the optimum value was shown at about 30%, and favorable results were obtained in the range of about 15% to about 35% in the light of permissible levels.

In addition, when viewed differently, it is possible to consider the case in terms of comparison between the input-shaft equivalent moment of inertia

$I_{T/IN}$ of the transmission and the transmission-side equivalent moment of inertia $I_{CT}$ of the clutch disc in the range where chattering of the gears occurs during idling of the engine. As a result of examining a conventional clutch disc and the clutch disc of the present invention, they were found to be in the relationships as shown in Fig. 10. In this drawing, the range E represents the range of the clutch disc of the present invention, in which the range was substantially above 50% with a representative value being 64% or thereabouts. On the other hand, the range F represents the range of the conventional clutch disc, in which the range was substantially below 20% with a representative value being 17% or thereabouts. From this fact, it can be said that the clutch disc of the present invention falls within the range wherein the transmission-side equivalent moment of inertia $I_{CT}$ accounts for more than half of the input shaft equivalent moment of inertia $I_{T/IN}$ of the transmission.

In the clutch disc having the arrangement shown in Figs. 1 to 4, the major components where the fly-wheel-side equivalent moment of inertia $I_{CF}$ of the clutch disc occurs in the range where the chattering of the gears occur during idling of the engine are only the clutch facings 10, the cushioning plate 12, the disc plate 14, and the supplementary disc plate 15. Meanwhile, the transmission-side equivalent moment of inertia $I_{CT}$ occurs in all the components other than those mentioned above. Accordingly, to set the ratio of the tranmission-side equivalent moment of inertia $I_{CT}$ of the clutch disc to the overall moment of inertia $I_{CD}$ of the clutch disc to 15% or above, it is particularly desirable to adopt an arrangement in which the first damper 40 are connected to the engine side and the second and succeeding dampers 50, 51, to the transmission side. Incidentally, the springs 41 of the first dampers 40 do not substantially undergo displacement, and their moment of inertia is extremely small and can therefore be ignored theoretically.

When the clutch disc was fabricated using a material similar to a conventional one, the fly-wheel-side equivalent moment $I_{CF}$ of the clutch disc was about 75% (about 91 to 94% in the case of a conventional clutch disc), while the transmission-side equivalent moment of inertia $I_{CT}$ of the clutch disc was about 25% (about 6 - 9% in a conventional clutch disc).

Furthermore, as a result of conducting an experiment by mounting the clutch disc having the above-described arrangement in a vehicle with a gasoline engine, it was able to confirm that the problem of the occurrence of chattering of the transmission gears during idling can be eliminated. In addition, with respect to the first friction devices 42 as well, stable characteristics and durability were obtained over an extended period of time. Moreover, no adverse effect was exerted on the synchronizing performance of the manual transmission and the durability of the synchronizer ring and the like.

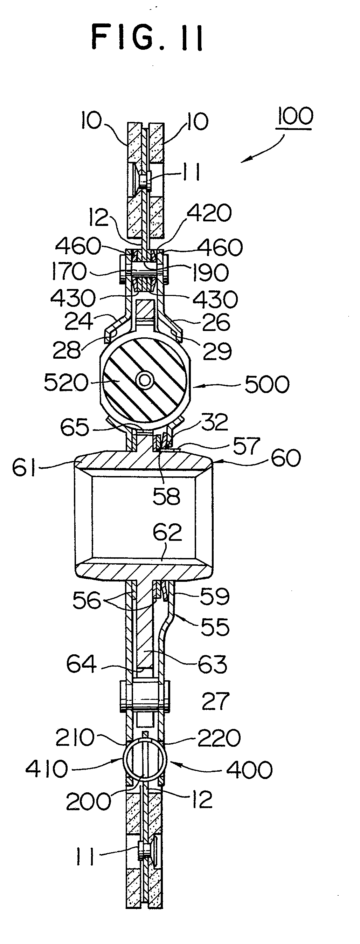

Next, Fig. 11 shows a clutch disc in accordance with a second embodiment of the present invention.

Incidentally, in Fig. 11, components corresponding to those shown in Figs. 1 and 2 are denoted by the same reference numerals as those given in Figs. 1 and 2, and a description thereof will be omitted.

The clutch disc 100 in accordance with this second embodiment is arranged such that first dampers 400 are respectively interposed between the cushioning plate 12 and the supplementary disc plates 24, 26, and are disposed in the same plane concentrically with second dampers 500 having second springs 510 made of rubber.

In other words, a plurality of rectangular apertures 200 for accommodating first springs 410 of the first damper are formed in the inner peripheral portion of the cushioning plate having the clutch facings on both surfaces thereof. Rectangular holes 210 and 220 which also correspond to the plates 24, 26 are also formed therein. The first springs 410 are mounted in these rectangular apertures. Elongated holes 190 are formed in the inner peripheral portion of the cushioning plate 12, and first stopper pins which integrally fix the plates 24, 26 pass through these elongated holes 190. The rotary motion of the cushioning plate 12 relative to the plates 24, 26 is restricted within a range defined by the torsional angles of $+ \Theta_1 - - \Theta_4$ when the first stopper pins 170 contact the inner surfaces of the elongated holes 190. Furthermore, between the cushioning plate 12 and the plates 24, 26 are interposed a friction member 430 which constitutes a first friction device 420 and is fitted with the first stopper pin 170 such as to prevent it from rotating, as well as a cone spring 450 which presses this friction member 430 against the cushioning plate 12. Incidentally, the frictional member 56 of the second friction device 55 is also interposed between the second supplementary disc plate 24 and the flange 63 of the second clutch hub.

In the clutch disc 100 having the above-described arrangement in accordance with this second embodiment, the clutch facings 10 and the cushioning plate 12 alone are the major components where the fly-wheel-side equivalent moment of inertia $I_{CF}$ of the clutch disc occurs in the range where chattering of the gears takes place during idling of the engine. Meanwhile, the transmission-side equivalent moment of inertia $I_{CT}$ occurs in all the components other than those mentioned above. When a clutch disc was fabricated using a material similar to a conventional one in the manner similar to the first embodiment, the fly-wheel-side equivalent moment of inertia $I_{CF}$ of the clutch disc was approximately 65%, and the transmission-side equivalent moment of inertia $I_{CT}$ of the clutch disc was approximately 35%.

Therefore, in accordance with the present invention, it is possible to set the transmission-side equivalent moment of inertia $I_{CT}$ of the clutch disc at a higher level than the first embodiment.

While the invention has been described above in its preferred embodiments, it is to be understood that various other modifications are possible within the scope of the invention. For instance, it is possible to modify the structures of the first dampers and the second and succeeding dampers (springs and frictional devices). In addition, the present invention can also be applied to a multiple disc clutch.

## Claims

1. A clutch disc comprising: clutch facings pinched and pressed between a pressure plate and a fly-wheel rotating with a crank shaft in one united body; first dampers operative at an initial torsional angle and composed of a first spring having a relatively small spring constant and a first friction device for providing a small degree of hysteresis; second and succeeding dampers operative at angles larger than a predetermined torsional angle and composed of second and succeeding springs having large spring constants and a second friction device for providing a large degree of hysteresis; and a clutch hub fitted with splines around the input shaft of a transmission such as to be fixed in relation thereto in the direction of rotation of said shaft and slidable in the axial direction, wherein each of said first dampers is connected to said clutch facings; and said second and succeeding dampers are connected to said clutch hub so that the output of the engine is transmitted from said first dampers to said transmission through said second and succeeding dampers, and wherein the equivalent moment of inertia applied to the side of said transmission is set to be 15 to 35% of the overall moment of inertia of said clutch disc.

0232151

FIG. 1

FIG. 2

# FIG. 3

FIG. 4

# F I G. 5

0232151

## FIG. 6

## FIG. 7

## FIG. 8

## FIG. 9

LEVEL OF CHATTERING OF GEARS DURING IDLING PERIOD

D

O LEVEL IN INTER-NAL SOUND PRES-SURE DIFFERENCE

ABOUT 15%     ABOUT 30%   ABOUT 35%

$I_{CT} / I_{CD} \times 100$  (%)

## FIG. 10

$I_{CT}$

E

F

$I_{T/IN}$

# FIG. 11